# FASCICULE DE BREVET EUROPEEN

(11) **EP 2 261 521 B1**
(45) Date de publication et mention de la délivrance du brevet: **13.02.2013**
(21) Numéro de dépôt: 10165660.1
(22) Date de dépôt: 11.06.2010
(51) Int. Cl.: F16C 11/06

(54) **Ensemble d'articulation mécanique et procédé pour assembler un tel ensemble**
Gelenkvorrichtung und Verfahren zum Zusammenbau eines solchen Gelenks
Articulation device and method of assembly for such a device

(30) Priorité: 12.06.2009 FR 0953945
(43) Date de publication de la demande: 15.12.2010
(73) Titulaire: SKF Aerospace France, 26240 Saint-Vallier-sur-Rhône (FR)
(72) Inventeur: Blachon, Yvan, 26240, PONSAS (FR)
(74) Mandataire: Grand, Guillaume

(56) Documents cités:
- EP-A- 2 039 949
- DE-U1- 29 703 146
- JP-A- 56 101 418
- US-A- 3 371 398
- US-A- 4 593 917
- US-A- 5 033 872
- US-A- 5 743 658

## Description

La présente invention concerne un ensemble d'articulation mécanique, notamment un ensemble rotulant. Par ailleurs, la présente invention concerne un procédé pour assembler un tel ensemble. Dans l'industrie aéronautique, il est connu d'utiliser un ensemble d'articulation mécanique pour immobiliser deux organes en translation relative, tels qu'une bielle et une pièce de structure, tout en permettant un mouvement relatif en rotation de ces organes. Un ensemble d'articulation mécanique permet notamment de compenser localement les déformations et/ou les mouvements d'un aéronef en service.

Un exemple d'un tel ensemble d'articulation est fourni par US-A-4 593 917, sur lequel est basé le préambule de la revendication 1.

Un ensemble d'articulation mécanique de l'art antérieur, en particulier un ensemble rotulant, comprend généralement une bague intérieure telle qu'une noix de rotule où est monté un axe, un organe intermédiaire définissant un logement où s'articule la noix de rotule, ainsi qu'un corps externe définissant une chambre pour retenir l'organe intermédiaire. Cette chambre est une cavité configurée pour recevoir l'organe intermédiaire. De plus, cette chambre est configurée pour permettre un débattement en translation suivant une direction orthogonale à l'axe d'articulation. Ce débattement autorise à l'axe monté dans cet ensemble rotulant un degré de liberté en plus de ceux autorisés par la liaison rotule. Pour réaliser ce débattement, la chambre d'un ensemble d'articulation mécanique de l'art antérieur a deux surfaces planes et parallèles qui s'étendent de part et d'autre de l'organe intermédiaire. L'organe intermédiaire présente deux surfaces planes et complémentaires aux surfaces planes de la chambre, ce qui permet le débattement en translation de l'organe intermédiaire par rapport au corps externe.

Cependant, les liaisons appui-plan formées entre ces surfaces planes respectives présentent une capacité d'accommodation du contact relativement limitée. En effet, l'ensemble rotulant doit présenter une épaisseur peu encombrante, donc des surfaces planes relativement limitées. En outre, pour une qualité d'usinage commune, les surfaces planes respectives du corps externe et de l'organe intermédiaire réalisent des liaisons appui-plan imparfaites, car les surfaces planes ne sont en contact que le long de deux lignes. C'est pourquoi les pressions de contact entre le corps externe et l'organe intermédiaire sont relativement élevées, ce qui diminue la durée de vie de l'ensemble rotulant. Par ailleurs, de telles liaisons appui-plan présentent une capacité de rétention des lubrifiants relativement limitée. En outre, de telles liaisons appui-plan n'empêchent pas la translation de l'organe intermédiaire par rapport au corps externe suivant l'axe d'articulation, si bien qu'un ensemble rotulant de l'art antérieur doit en outre comprendre un composant de blocage pour retenir l'organe intermédiaire dans la chambre suivant l'axe d'articulation. Or, un tel organe de blocage augmente l'encombrement, le coût et la difficulté d'assemblage d'un tel ensemble rotulant.

La présente invention vise notamment à remédier à ces inconvénients, en proposant un ensemble rotulant peu encombrant, ayant une longue durée de vie et relativement simple à assembler.

A cet effet, la présente invention a pour objet un ensemble d'articulation mécanique, notamment ensemble rotulant, tel que défini à la revendication 1.

Des caractéristiques avantageuses mais facultatives de la présente invention, prises isolément ou selon toute combinaison techniquement admissible, sont spécifiées aux revendications dépendantes 2 à 10.

Par ailleurs, la présente invention a pour objet un procédé pour assembler un ensemble d'articulation mécanique selon l'une des revendications 1 à 10, notamment un ensemble rotulant, le procédé étant tel que défini à la revendication 11.

Grâce à l'invention, l'organe intermédiaire est retenu dans la chambre de maintien, les pressions de contact sont relativement faibles, la capacité de rétention des lubrifiants est importante, l'encombrement de l'ensemble rotulant est limité et son assemblage est relativement simple.

La présente invention sera bien comprise et ses avantages ressortiront aussi à la lumière de la description qui va suivre, donnée uniquement à titre d'exemple non limitatif et fait en référence aux dessins annexés, dans lesquels :
- la figure 1 est une vue en perspective avec arraché d'un ensemble d'articulation mécanique conforme à l'invention ;
- la figure 2 est une coupe de l'ensemble d'articulation mécanique de la figure 1 suivant le plan II à la figure 1 ;
- la figure 3 est une coupe de l'ensemble d'articulation mécanique de la figure 1 suivant le plan III à la figure 1 ;
- la figure 4 est une vue en perspective éclatée de l'ensemble d'articulation mécanique de la figure 1 ;
- la figure 5 est une vue en perspective, suivant l'angle de la figure 1, de l'ensemble d'articulation mécanique de la figure 1 à l'état désassemblé ;
- la figure 6 est une vue analogue à la figure 5 de l'ensemble de l'articulation mécanique de la figure 1 au cours d'une étape d'assemblage ;
- la figure 7 est une vue analogue à la figure 5 de l'ensemble de l'articulation mécanique de la figure 1 au cours d'une autre étape d'assemblage ; et
- la figure 8 est une vue analogue à la figure 5 de l'ensemble d'articulation mécanique de la figure 1 à l'état assemblé.

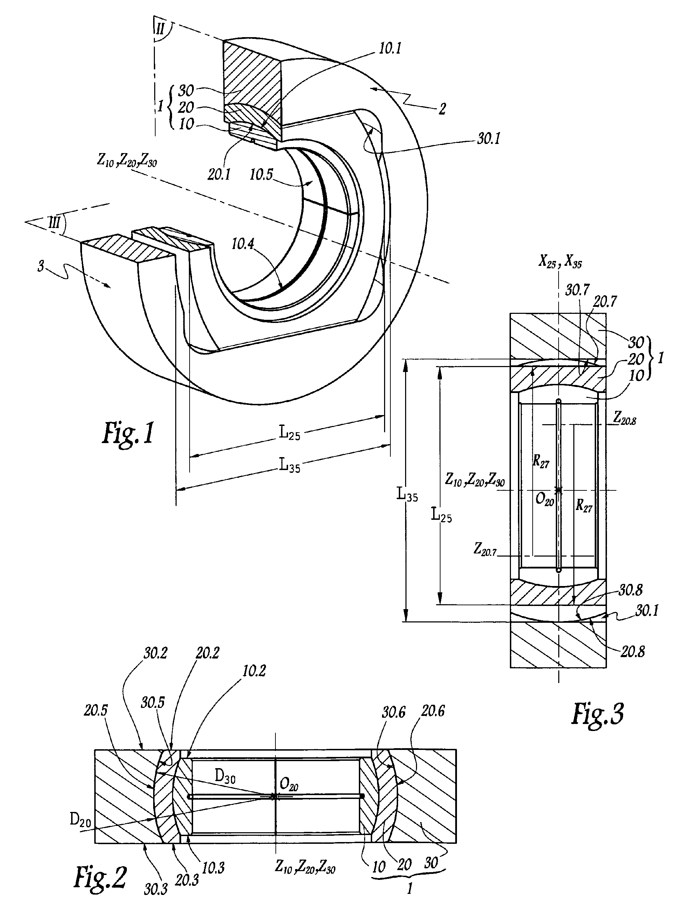

La figure 1 illustre un ensemble rotulant 1 qui forme un ensemble d'articulation mécanique. L'ensemble rotulant 1 comprend une noix de rotule 10, un insert 20 et un corps 30. La noix 10 forme une bague intérieure de l'ensemble rotulant 1 et elle réalise une liaison rotule autour d'un axe de rotule Z₁₀. L'insert 20 forme un organe intermédiaire de l'ensemble rotulant 1. Le corps 30 définit un corps externe de l'ensemble rotulant 1. La noix 10, l'insert 20 et le corps 30 ont des formes annulaires, c'est-à-dire qu'ils présentent chacun un orifice débouchant dans leur région centrale. L'ensemble rotulant 1 a deux faces 2 et 3 planes et parallèles. La noix 10 a deux faces 10.2 et 10.3 planes et parallèles. L'insert 20 a deux faces 20.2 et 20.3 planes et parallèles. Le corps 30 a deux faces 30.2 et 30.3 planes et parallèles.

L'ensemble rotulant 1 comprend en outre un anneau élastique 4 logé dans une gorge 10.4 qui est réalisée sur la surface interne 10.5 de la noix 10. L'anneau élastique 4 contribue à l'assemblage d'un axe non représenté dans l'ensemble rotulant 1.

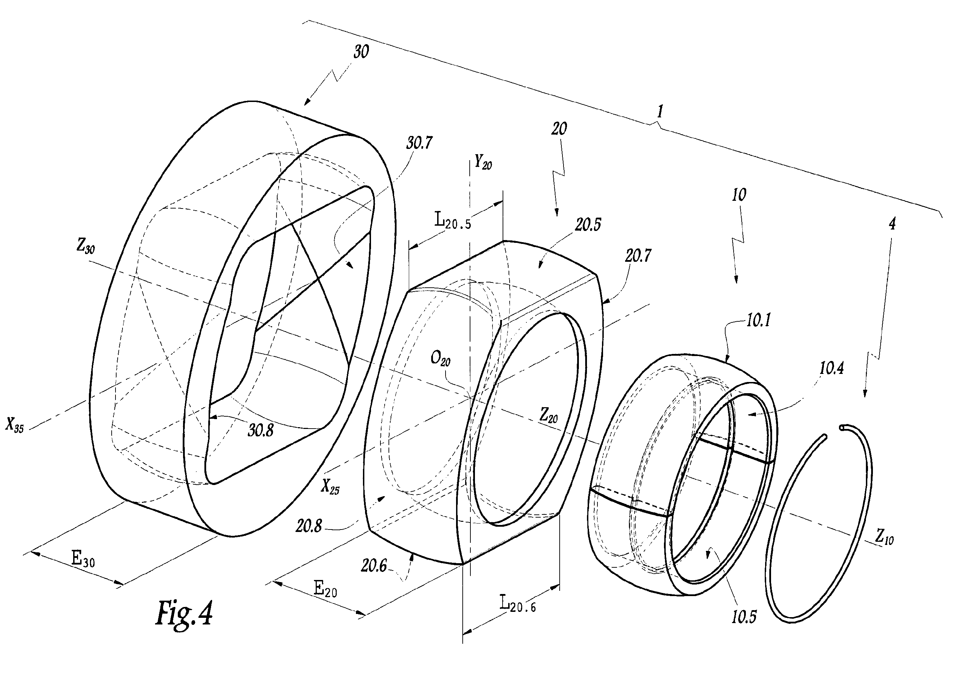

Comme le montrent les figures 1 à 3, lorsque l'ensemble rotulant 1 est à l'état assemblé, la noix 10 est logée dans l'insert 20, lequel est maintenu dans le corps 30. Comme le montre la figure 4, la noix 10 a une surface externe d'articulation 10.1 qui est de forme sphérique tronquée. L'enveloppe sphérique définissant la surface externe d'articulation 10.1 présente une symétrie de révolution autour de l'axe de rotule Z₁₀. Cette enveloppe sphérique est tronquée par deux plans imaginaires qui sont parallèles entre eux et perpendiculaires à l'axe de rotule Z₁₀.

L'insert 20 a une surface interne de palier 20.1 qui est de forme complémentaire à la forme de la surface externe d'articulation 10.1. La surface interne de palier 20.1 est donc de forme sphérique tronquée. L'axe de révolution de la surface interne de palier 20.1 définit un axe d'articulation Z₂₀. Comme la surface externe d'articulation 10.1 et la surface interne de palier 20.1 sont de formes complémentaires, l'insert 20 peut loger la noix 10. L'écart angulaire entre l'axe de rotule Z₁₀ et l'axe d'articulation Z₂₀ correspond à un angle de rotule qui varie lorsque la noix 10 tourne dans le logement formé par l'insert 20. Dans l'exemple des figures 1 à 8, l'angle de rotule est nul, car l'axe de rotule Z₁₀ et l'axe d'articulation Z₂₀ sont colinéaires.

Dans la présente demande, l'adjectif « interne » qualifie une entité, par exemple une surface, qui est proche de ou tournée vers l'axe d'articulation Z₂₀. Inversement, l'adjectif « externe » qualifie une entité, par exemple une surface, qui est éloignée de ou opposée à l'axe d'articulation Z₂₀.

Comme le montre la figure 1, le corps 30 définit une chambre 30.1 pour retenir l'insert 20. La chambre 30.1 s'étend autour d'un axe central Z₃₀ du corps 30. Les dimensions de la chambre 30.1 permettent une translation de l'insert 20 perpendiculairement à l'axe d'articulation Z₂₀, comme cela est détaillé ci-après.

Par ailleurs, l'insert 20 définit deux premières surfaces 20.5 et 20.6 qui sont formées par des portions cylindriques convexes. En l'occurrence, les premières surfaces 20.5 et 20.6 sont deux portions d'un même premier cylindre à base circulaire, si bien qu'elles ont un premier axe X₂₅ pour axe de révolution commun. Comme le montre la figure 4, les premières surfaces 20.5 et 20.6 s'étendent sur deux côtés opposés de l'insert 20. Plus précisément, les premières surfaces 20.5 et 20.6 sont symétriques par rapport à un centre O₂₀ de l'insert 20 situé à l'intersection de l'axe d'articulation Z₂₀ et du premier axe X₂₅.

De façon similaire, le corps 30 définit deux deuxièmes surfaces 30.5 et 30.6 qui sont formées par des portions cylindriques concaves. En l'occurrence, les deuxièmes surfaces 30.5 et 30.6 sont des portions d'un même deuxième cylindre à base circulaire, si bien qu'elles ont un deuxième axe X₃₅ pour axe de révolution commun. Les deuxièmes surfaces 30.5 et 30.6 s'étendent sur deux côtés opposés de la chambre 30.1. Les deuxièmes surfaces sont symétriques par rapport au centre non représenté de la chambre 30.1.

Le diamètre D₂₀ de la base circulaire du premier cylindre est sensiblement égal au diamètre D₃₀ de la base circulaire du deuxième cylindre. En l'occurrence, le diamètre D₂₀ et le diamètre D₃₀ sont identiques. En d'autres termes, lorsque l'ensemble rotulant 1 est à l'état assemblé, chaque première surface 20.5 ou 20.6 coïncide sensiblement avec une deuxième surface 30.5 ou 30.6 respective. Dans l'exemple des figures 1 à 8, chaque deuxième surface 30.5 ou 30.6 recouvre exactement la première surface 20.5 ou 20.6 respective.

Ainsi, les premières surfaces 20.5 et 20.6 coopèrent avec les deuxièmes surfaces 30.5 et 30.6, ce qui permet une rotation de l'insert 20 par rapport au corps 30 autour du premier axe X₂₅, car le premier axe X₂₅ coïncide avec le deuxième axe X₃₅ lorsque l'ensemble rotulant 1 est à l'état assemblé. En d'autres termes, l'insert 20 pivote dans la chambre 30.1.

Chaque première surface 20.5 ou 20.6 est configurée pour coopérer avec une deuxième surface 30.5 ou 30.6 respective, de telle sorte que, lorsque l'insert 20 est monté dans la chambre 30.1, les premières surfaces 20.5 et 20.6 et les deuxièmes surfaces 30.5 et 30.6 permettent une rotation de l'insert 20 par rapport au corps 30, mais empêchent une translation de l'insert 20 parallèlement à l'axe d'articulation Z₂₀ ou parallèlement à un axe orthogonal Y₂₀ à l'axe d'articulation Z₂₀ et au deuxième axe de révolution X₃₅.

Cette rotation a une amplitude limitée en raison du recouvrement de l'insert 20 par le corps 30, c'est-à-dire par les épaisseurs E₂₀ et E₃₀ respectives de l'insert 20 et du corps 30 mesurées suivant l'axe d'articulation Z₂₀. En service, un axe non représenté est monté dans l'ensemble rotulant 1. Un tel axe présente un faible débattement angulaire, ce qui limite la rotation de l'insert 20 dans le corps 30 et empêche que l'insert ne s'échappe.

De plus, lorsque l'insert 20 est monté dans la chambre 30.1, la coopération des premières surfaces 20.5 et 20.6 avec les deuxièmes surfaces 30.5 et 30.6 empêche une translation de l'insert 20 parallèlement à l'axe d'articulation Z₂₀ ou parallèlement à un axe Y₂₀ qui est orthogonal à l'axe d'articulation Z₂₀ et au deuxième axe X₃₅. En d'autres termes, lorsque les premières surfaces 20.5 et 20.6 coopèrent respectivement avec les deuxièmes surfaces 30.5 et 30.6, il est possible de transmettre des forces parallèlement à l'axe Y₂₀.

Les dimensions de la chambre 30.1, mesurées suivant le deuxième axe X₃₅ sont supérieures aux dimensions de l'insert 20, mesuré suivant le premier axe X₂₅. Ainsi, lorsque l'insert 20 est monté dans la chambre 30.1, les premières surfaces 20.5 et 20.6 et les deuxièmes surfaces 30.5 et 30.6 permettent, par leur coopération, une translation de l'insert 20 par rapport au corps 30. En d'autres termes, l'insert 20 coulisse dans le corps 30 au moyen du glissement des premières surfaces 20.5 et 20.6 sur les deuxièmes surfaces 30.5 et 30.6. Dans le mode de réalisation illustré aux figures 1 à 8, le rapport entre la largeur L₃₅ de la chambre 30.1, c'est-à-dire sa plus grande dimension mesurée suivant le deuxième axe X₃₅, et la largeur L₂₅ est compris entre 1,03 et 1,20. Ces largeurs L₂₅ et L₃₅ déterminent l'amplitude de la translation de l'insert 20 par rapport au corps 30 tel qu'évoquée ci-dessus.

Le rapport entre la largeur L₂₅ de l'insert 20, c'est-à-dire sa plus grande dimension mesurée suivant le premier axe X₂₅, et l'amplitude de la translation de l'insert 20 par rapport au corps 30 est compris entre 5 et 20. Un tel rapport offre un degré de liberté convenable à l'insert 20.

Comme le montre la figure 4, les deux premières surfaces 20.5 et 20.6 sont raccordées entre elles par deux troisièmes surfaces 20.7 et 20.8 qui s'étendent de part et d'autre des premières surfaces 20.5 et 20.6. Les troisièmes surfaces 20.7 et 20.8 sont formées par des portions de cylindres dont les bases circulaires ont le même rayon R₂₇ et dont les axes de révolution respectifs Z_{20.7} et Z_{20.8} sont disjoints, parallèles à l'axe d'articulation Z₂₀ et sécants au premier axe X₂₅, comme le montrent les figures 3 et 4.

Une section de la chambre 30.1 transversalement à l'axe d'articulation Z₂₀ a une forme rectangulaire ayant des congés circulaires à chacun de ses coins. De plus, la chambre 30.1 présente deux surfaces latérales de butée 30.7 et 30.8 qui sont de forme cylindrique et complémentaire aux formes respectives des troisièmes surfaces 20.7 et 20.8. Au cours de sa translation parallèlement au premier axe X₂₅, l'insert 20 bute sur la surface latérale de butée 30.7 ou 30.8.

Par ailleurs, le rapport entre la plus grande dimension L₂₅ de l'insert 20 mesurée suivant le premier axe X₂₅ au numérateur, et la largeur L_{20.5} ou L_{20.6} mesurée suivant le premier axe X₂₅ au dénominateur, est égal à 3,1. En pratique, ce rapport est compris entre 2,5 et 3,5. Un tel rapport permet d'éviter un coincement lorsque l'insert 20 est déplacé en translation dans la chambre 30.1.

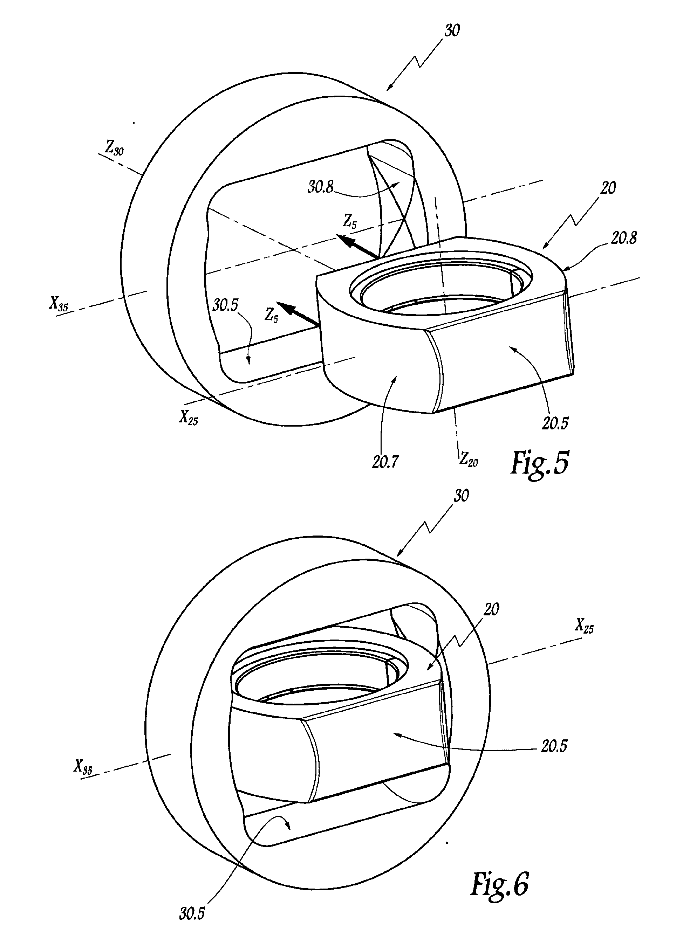

Les figures 5 à 8 illustrent quatre étapes d'un procédé pour assembler l'ensemble rotulant 1.

La figure 5 illustre une première étape, dans laquelle on introduit l'insert 20 dans la chambre 30.1 en translation suivant l'axe central Z₃₀, comme le montrent les flèches Z₅. Pour son introduction dans le corps 30, l'insert 20 est placé perpendiculairement au corps 30, c'est-à-dire que l'axe d'articulation Z₂₀ est perpendiculaire à l'axe central Z₃₀. De plus, le premier axe X₂₅ est placé parallèlement au deuxième axe X₃₅. Préalablement, on peut faire coïncider l'axe de rotule Z₁₀ et l'axe d'articulation Z₂₀.

Dans la deuxième étape illustrée à la figure 6, on arrête la translation suivant les flèches Z₅ lorsque le premier axe X₂₅ coïncide avec le deuxième axe X₃₅.

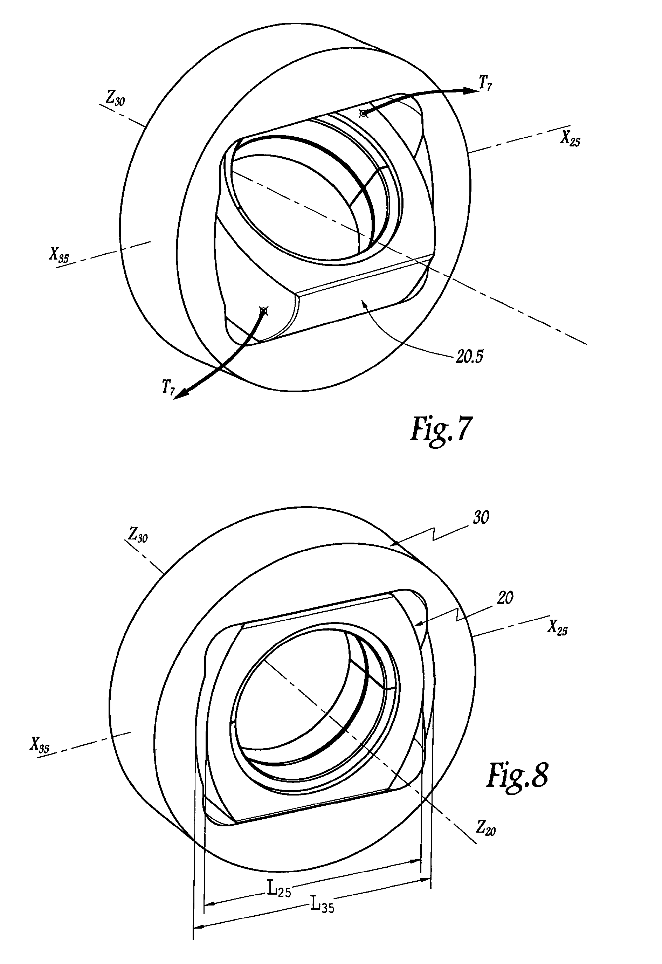

Dans une troisième étape illustrée à la figure 7, on fait pivoter l'insert 20 par rapport au corps 30 et autour du premier axe X₂₀, comme le montrent les flèches T₇. Cette troisième étape se termine lorsque les arêtes des premières surfaces 20.5 et 20.6 entrent en contact respectivement avec les arêtes des deuxièmes surfaces 30.5 et 30.6.

Dans une quatrième étape illustrée à la figure 8, on fait coopérer les premières surfaces 20.5 et 20.6 avec les deuxièmes surfaces 30.5 et 30.6. Pour cela, on continue le pivotement de l'insert 20 par rapport au corps 30 et autour du premier axe X₂₅. Cette quatrième étape s'achève lorsque le recouvrement entre les premières surfaces 20.5 et 20.6 et les deuxièmes surfaces 30.5 et 30.6 est maximal.

Dans une quatrième étape illustrée à la figure 8, l'ensemble rotulant 1 se trouve à l'état assemblé, dans lequel l'insert 20 est retenu dans la chambre 30.1. L'insert 20 peut alors se déplacer en translation par rapport au corps 30 avec amplitude limitée parallèlement au deuxième axe X₂₅. Cette translation confère un degré de liberté à un axe non représenté monté dans l'ensemble rotulant 1. Un ensemble d'articulation mécanique conforme à l'invention permet donc d'améliorer l'accommodation du contact entre corps et insert, notamment car il augmente l'étendue des surfaces en contact. La pression ou contrainte de contact est donc réduite par rapport à un ensemble d'articulation mécanique de l'art antérieur. De plus, un ensemble d'articulation mécanique conforme à l'invention ne nécessite pas de pièce supplémentaire pour maintenir l'insert dans le corps et l'immobiliser suivant l'axe central du corps. L'ensemble d'articulation mécanique est donc compact et peu encombrant. Par ailleurs, la géométrie des premières et deuxièmes surfaces améliore la retenue de lubrifiant, notamment liquide, ce qui augmente la durée de vie de l'ensemble d'articulation mécanique.

La réduction de pression de contact provient, d'une part, de l'augmentation de la capacité d'accommodation du contact entre insert et corps et, d'autre part, de l'augmentation de la surface de contact entre insert et corps.

Selon une variante non représentée, les faces de l'ensemble rotulant et/ou de l'un ou l'autre de ces composants ne sont pas planes, mais par exemple bombées.

## Revendications

1. Ensemble d'articulation mécanique (1), notamment ensemble rotulant, comprenant :
- une bague intérieure (10), telle qu'une noix de rotule, ayant une surface externe d'articulation (10.1) de forme sensiblement sphérique tronquée,
- un organe intermédiaire (20) ayant une surface interne de palier (20.1) qui est de forme sensiblement sphérique tronquée et complémentaire à la surface externe d'articulation (10.1) de façon à loger la bague intérieure (10), l'axe de révolution de la surface interne de palier (20.1) définissant un axe d'articulation (Z₂₀), lequel organe intermédiaire (20) définit deux premières surfaces (20.5, 20.6) formées par des portions cylindriques, les premières surfaces (20.5, 20.6) ayant un même premier axe de révolution (X₂₅), et
- un corps externe (30) définissant une chambre (30.1) pour retenir l'organe intermédiaire (20) et définissant deux deuxièmes surfaces (30.5, 30.6) formées par des portions cylindriques, les deuxièmes surfaces (30.5, 30.6) ayant un même deuxième axe de révolution (X₃₅),
l'ensemble d'articulation mécanique (1) étant **caractérisé en ce que** l'axe d'articulation (Z₂₀) et le premier axe de révolution (X₂₅) sont sécants, et **en ce que** chaque première surface (20.5, 20.6) est configurée pour coopérer avec respectivement une des deuxièmes surfaces (30.5, 30.6) de telle sorte que, lorsque l'organe intermédiaire (20) est monté dans la chambre (30.1), les premier (X₂₅) et deuxième (X₃₅) axes de révolution sont coïncidants et les premières surfaces (20.5, 20.6) et les deuxièmes surfaces (30.5, 30.6) permettent une rotation de l'organe intermédiaire (20) par rapport au corps externe (30) autour du premier axe de révolution (X₂₅), mais empêchent une translation de l'organe intermédiaire (20) parallèlement à l'axe d'articulation (Z₂₀) ou parallèlement à un axe orthogonal (Y₂₀) à l'axe d'articulation (Z₂₀) et au deuxième axe de révolution (X₃₅).

2. Ensemble (1) selon la revendication 1, **caractérisé en ce que** les deux premières surfaces (20.5, 20.6) sont symétriques par rapport à un centre (O₂₀) de l'organe intermédiaire (20), situé à l'intersection de l'axe d'articulation (Z₂₀) et du premier axe de révolution (X₂₅).

3. Ensemble (1) selon l'une des revendications précédentes, **caractérisé en ce que** les premières surfaces (20.5, 20.6) sont formées par des portions d'un même premier cylindre à base circulaire et **en ce que** les deuxièmes surfaces (30.5, 30.6) sont formées par des portions d'un même deuxième cylindre à base circulaire, le diamètre (D₂₀) de la base circulaire du premier cylindre étant sensiblement égal au diamètre (D₃₀) de la base circulaire du deuxième cylindre.

4. Ensemble (1) selon la revendication 3, **caractérisé en ce que** le diamètre (D₂₀) de la base circulaire du premier cylindre et le diamètre (D₃₀) de la base circulaire du deuxième cylindre sont identiques.

5. Ensemble (1) selon la revendication 3 ou 4, **caractérisé en ce que** chaque deuxième surface (30.5, 30.6) recouvre exactement la première surface respective (20.5, 20.6).

6. Ensemble (1) selon l'une des revendications précédentes, **caractérisé en ce que** les dimensions de la chambre (30.1), mesurées suivant le deuxième axe de révolution (X₃₅), sont supérieures aux dimensions de l'organe intermédiaire (20), mesurées suivant le premier axe de révolution (X₂₅), de telle sorte que, lorsque l'organe intermédiaire (20) est monté dans la chambre (30.1), les premières surfaces (20.5, 20.6) et les deuxièmes surfaces (30.5, 30.6) permettent une translation de l'organe intermédiaire (20) par rapport au corps externe (30).

7. Ensemble (1) selon la revendication 6, **caractérisé en ce que** le rapport entre la plus grande dimension (L₂₅) de l'organe intermédiaire (20), mesurée suivant le premier axe de révolution (X₂₅), et l'amplitude de la translation de l'organe intermédiaire (20) par rapport au corps externe (30) est compris entre 5 et 20.

8. Ensemble (1) selon la revendication 7, **caractérisé en ce que** le rapport entre la plus grande dimension (L₃₅) de la chambre (30.1), mesurée suivant le deuxième axe de révolution (X₃₅), et la plus grande dimension (L₂₅) de l'organe intermédiaire (20), mesurée suivant le premier axe de révolution (X₂₅), est compris entre 1,03 et 1,20.

9. Ensemble (1) selon l'une des revendications précédentes, **caractérisé en ce que** les deux premières surfaces (20.5, 20.6) sont raccordées entre elles par deux troisièmes surfaces (20.7, 20.8) formées par des portions de cylindres dont les bases circulaires ont même rayon (R₂₇) et dont les axes de révolution (Z_{20.7}, Z_{20.8}) sont disjoints, parallèles à l'axe d'articulation et sécants au premier axe de révolution (X₂₅).

10. Ensemble (1) selon l'une des revendications précédentes, **caractérisé en ce que** le rapport entre la plus grande dimension (L₂₅) de l'organe intermédiaire (20), mesurée suivant le premier axe de révolution (X₂₅), et la largeur (L_{20.5}, L_{20.6}) de chaque première surface (20.5, 20.6), mesurée suivant le premier axe de révolution (X₂₅), est compris entre 2,5 et 3,5, de préférence égal à 3,1.

11. Procédé pour assembler un ensemble d'articulation mécanique (1) selon l'une des revendications précédentes, notamment un ensemble rotulant, le procédé étant **caractérisé en ce qu'**il comprend les étapes :
- introduire l'organe intermédiaire (20) dans la chambre (30.1) en translation suivant un axe central (Z₃₀) du corps externe (30),
- faire coïncider le premier axe de révolution (X₂₅) avec le deuxième axe de révolution (X₃₅) ;
- faire pivoter l'organe intermédiaire (20) par rapport au corps externe (30) et autour du premier axe de révolution (X₂₅) ;
- faire coopérer les premières surfaces (20.5, 20.6) et les deuxièmes surfaces (30.5, 30.6).

## Claims

1. A mechanical joint assembly, in particular a swivel assembly, comprising:
· An inner ring (10), such as a ball core, having an outer joint surface (10.1) substantially in the shape of a truncated sphere; · an intermediate member (20) having a bearing inside surface (20.1) that is substantially in the shape of a truncated sphere and complementary to the joint outside surface (10.1) so as to receive the inner ring (10), the axis of revolution of the bearing inside surface (20.1) defining a joint axis (Z₂₀) of the joint, the intermediate member defining two first surfaces(20.5, 20.6) formed by cylindrical portions, the first surfaces (20.5, 20.6) having a common first axis of revolution (X₂₅); and
• an outer body (30) defining a chamber (30.1) for retaining the intermediate member (20) and defining two second surfaces (30.5, 30.6) formed by cylindrical portions, the second surfaces (30.5, 30.6) having the same second axis of revolution (X₃₅),
the mechanical joint assembly being **characterized in that** the joint axis (Z₂₀) intersects the first axis of revolution (X₂₅), and **in that** each first surface (20.5, 20.6) is configured to co-operate respectively with one of the second surfaces (30.5, 30.6) in such a manner that when the intermediate member (20) is mounted in the chamber (30.1), the first axis of revolution (X₂₅) coincides with the second axis of revolution (X₃₅) and the first surfaces (20.5, 20.6) and the second surfaces (30.5, 30.6) enable the intermediate member (20) to rotate relative to the outer body (30) about the first axis of revolution (X₂₅) but prevent the intermediate member (20) from moving parallel to the joint axis (Z₂₀) or parallel to an axis (Y₂₀) orthogonal to the joint axis (Z₂₀) and to the second axis of revolution (X₃₅).

2. An assembly (1) according to claim 1, **characterized in that** the two first surfaces (20.5, 20.6) are symmetrical about a center (O₂₀) of the intermediate member (20), which is situated at the intersection between the joint axis (Z₂₀) and the first axis of revolution (X₂₅).

3. An assembly (1) according to any one of the preceding claims, **characterized in that** the first surfaces (20.5, 20.6) are formed by portions of the same first circular cylinder, and **in that** the second surfaces (30.5, 30.6) are formed by portions of the same second circular cylinder, the diameter (D₂₀) of the circular base of the first cylinder being substantially equal to the diameter (D₃₀) of the circular base of the second cylinder.

4. An assembly (1) according to claim 3, **characterized in that** the diameter (D₂₀) of the circular base of the first cylinder, and the diameter (D₃₀) of the circular base of the second cylinder are identical.

5. An assembly (1) according to claim 3 or 4, **characterized in that** each second surface (30.5, 30.6) exactly covers the respective first surface (20.5, 20.6).

6. An assembly (1) according to any one of the preceding claims, **characterized in that** the dimensions of the chamber (30.1) measured along the second axis of revolution (X₃₅) are greater than the dimensions of the intermediate member (20) measured along the first axis of revolution (X₂₅), such that when the intermediate member (20) is mounted in the chamber (30.1), the first surfaces (20.5, 20.6) and the second surfaces (30.5, 30.6) enable the intermediate member (20) to move in translation relative to the outer body (30).

7. An assembly (1) according to claim 6, **characterized in that** the ratio of the greatest dimension (L₂₅) of the intermediate member (20) measured along the first axis of revolution (X₂₅) to the amplitude of the movement in translation of the intermediate member (20) relative to the outer body (30) lies in the range 5 to 20.

8. An assembly (1) according to claim 7, **characterized in that** the ratio of the greatest dimension (L₃₅) of the chamber (30.1) measured along the second axis of revolution (X₃₅) to the greatest dimension (L₂₅) of the intermediate (20) member measured along the first axis of revolution (X₂₅) lies in the range 1.03 to 1.20.

9. An assembly (1) according to any one of the preceding claims, **characterized in that** the two first surfaces (20.5, 20.6) are connected together by two third surfaces (20.7, 20.8), formed by portions of cylinders having circular bases of the same radius (R₂₇) and axes of revolution (Z_{20.7}, Z_{20.8}) that are separate, being parallel to the joint axis and intersecting the first axis of revolution (X₂₅).

10. An assembly (1) according to any one of the preceding claims, **characterized in that** the ratio of the greatest dimension (L₂₅) of the intermediate member measured along the first axis (X₂₅) of revolution and the width (L_{20.5}, L_{20.6}) of each first surface (20.5, 20.6) measured along the first axis of revolution (X₂₅) lies in the range 2.5 to 3.5, and is preferably equal to 3.1.

11. A method of assembling a mechanical joint assembly (1) according to any one of the preceding claims, in particular a swivel assembly, the method comprising the following steps:
• introducing the intermediate member (20) in the chamber (30.1) by moving in translation along a central axis (Z₃₀) of the outer body (30);
• causing the first axis of revolution (X₂₅) to coincide with the second axis of revolution (X₃₅);
• pivoting the intermediate member (20) relative to the outer body (30) about the first axis of revolution (X₂₅); and
• causing the first (20.5, 20.6) and second (30.5, 30.6) surfaces to co-operate.

## Patentansprüche

1. Mechanische Gelenkanordnung (1), insbesondere Kugelgelenkanordnung, umfassend:
- einen Innenring (10), wie eine Kugelnuss, die eine äußere Gelenkfläche (10.1) in einer Kugelabschnittsform aufweist,
- ein Zwischenteil (20), das eine innere Lagerfläche (20.1) aufweist, die eine Kugelabschnittsform komplementär zu der äußeren Gelenkfläche (10.1) hat, derart, dass der Innenring (10) gelagert wird kann, wobei die Drehachse der inneren Lagerfläche (20.1) eine Gelenkachse (Z₂₀) definiert, wobei das Zwischenteil (20) zwei erste Flächen (20.5, 20.6) definiert, die durch zylindrische Bereiche gebildet werden, wobei die ersten Flächen (20.5, 20.6) eine selbe erste Drehachse (X₂₅) haben, und
- einen Außenkörper (30), der eine Kammer (30.1) begrenzt, um das Zwischenteil (20) zu halten und der zwei zweite Flächen (30.5, 30.6) definiert, die durch zylindrische Bereich gebildet werden, wobei die zweiten Flächen (30.5, 30.6) eine selbe zweite Drehachse (X₃₅) haben,
wobei die mechanische Gelenkanordnung (1) **dadurch gekennzeichnet ist, dass** die Gelenkachse (Z₂₀) und die erste Drehachse (X₂₅) schneidend sind und dass jede erste Fläche (20.5, 20.6) ausgebildet ist, um mit jeweils einer der zweiten Flächen (30.5, 30.6) derart zusammenzuarbeiten, dass, wenn das Zwischenteil (20) in der Kammer (30.1) montiert ist, die erste (X₂₅) und die zweite (X₃₅) Drehachse übereinstimmend sind und die ersten Flächen (20.5, 20.6) und die zweiten Flächen (30.5, 30.6) eine Drehung des Zwischenteils (20) in Bezug auf den Au-βenkörper (30) um die erste Drehachse (X₂₅) gestatten, aber eine Translation des Zwischenteils (20) parallel zur Gelenkachse (Z₂₀) oder parallel zu einer Achse (Y₂₀) orthogonal zur Gelenkachse (Z₂₀) und zur zweiten Drehachse (X₃₅) verhindern.

2. Anordnung (1) nach Anspruch 1, **dadurch gekennzeichnet, dass** die zwei ersten Flächen (20.5, 20.6) symmetrisch in Bezug auf eine Mitte (O₂₀) des Zwischenteils (20) sind, die an dem Schnittpunkt der Gelenkachse (Z₂₀) und der ersten Drehachse (X₂₅) angeordnet ist.

3. Anordnung (1) nach einem der vorhergehenden Ansprüche, **dadurch gekennzeichnet, dass** die ersten Flächen (20.5, 20.6) durch Bereiche eines selben ersten Zylinders mit kreisförmiger Grundfläche gebildet werden und dass die zweiten Flächen (30.5, 30.6) durch Bereiche eines selben Zylinders mit kreisförmiger Grundfläche gebildet werden, wobei der Durchmesser (D₂₀) der kreisförmigen Grundfläche des ersten Zylinders im Wesentlichen gleich dem Durchmesser (D₃₀) der kreisförmigen Grundfläche des zweiten Zylinders ist.

4. Anordnung (1) nach Anspruch 3, **dadurch gekennzeichnet, dass** der Durchmesser (D₂₀) der kreisförmigen Grundfläche des ersten Zylinders und der Durchmesser (D₃₀) der kreisförmigen Grundfläche des zweiten Zylinders identisch sind.

5. Anordnung (1) nach Anspruch 3 oder 4, **dadurch gekennzeichnet, dass** jede zweite Fläche (30.5, 30.6) genau die jeweilige erste Fläche (20.5, 20.6) bedeckt.

6. Anordnung (1) nach einem der vorhergehenden Ansprüche, **dadurch gekennzeichnet, dass** die Abmessungen der Kammer (30.1), gemessen gemäß der zweiten Drehachse (X₃₅), größer als die Abmessungen des Zwischenteils (20), gemessen gemäß der ersten Drehachse (X₂₅), sind, derart, dass, wenn das Zwischenteil (20) in der Kammer (30.1) montiert ist, die ersten Flächen (20.5, 20.6) und die zweiten Flächen (30.5, 30.6) eine Translation des Zwischenteils (20) in Bezug auf den Außenkörper (30) gestatten.

7. Anordnung (1) nach Anspruch 6, **dadurch gekennzeichnet, dass** das Verhältnis zwischen der größten Abmessungen (L₂₅) des Zwischenteils (20), gemessen gemäß der ersten Drehachse (X₂₅), und der Amplitude der Translation des Zwischenteils (20) in Bezug auf den Außenkörper (30) zwischen 5 und 20 liegt.

8. Anordnung (1) nach Anspruch 7, **dadurch gekennzeichnet, dass** das Verhältnis zwischen den größten Abmessungen (L₃₅) der Kammer (30.1), gemessen gemäß der zweiten Drehachse (X₃₅), und den größten Abmessungen (L₂₅) des Zwischenteils (20), gemessen gemäß der ersten Drehachse (X₂₅), zwischen 1,03 und 1,20 liegt.

9. Anordnung (1) nach einem der vorhergehenden Ansprüche, **dadurch gekennzeichnet, dass** die zwei ersten Flächen (20.5, 20.6) untereinander durch zwei dritte Flächen (20.7, 20.8) verbunden sind, die durch Bereiche von Zylindern gebildet werden, deren kreisförmige Grundflächen denselben Radius (R₂₇) haben und deren Drehachsen (Z_{20.7}, Z_{20.8}) getrennt, parallel zur Gelenkachse und schneidend mit der ersten Drehachse (X₂₅) sind.

10. Anordnung (1) nach einem der vorhergehenden Ansprüche, **dadurch gekennzeichnet, dass** das Verhältnis zwischen der größten Abmessung (L₂₅) des Zwischenteils (20), gemessen gemäß der ersten Drehachse (X₂₅), und der Breite (L_{20.5}, L_{20.6}) jeder ersten Fläche (20.5, 20.6), gemessen gemäß der ersten Drehachse (X₂₅), zwischen 2,5 und 3,5 liegt, vorzugsweise gleich 3,1 ist.

11. Verfahren zum Zusammensetzen einer mechanischen Gelenkanordnung (1) nach einem der vorhergehenden Ansprüche, insbesondere einer Kugelgelenkanordnung, wobei das Verfahren **dadurch gekennzeichnet ist, dass** es die Schritte umfasst:
- Einführen des Zwischenteils (20) in die Kammer (30.1) in translatorischer Weise gemäß einer Mittelachse (Z₃₀) des Außenkörpers (30),
- die erste Drehachse (X₂₅) mit der zweiten Drehachse (X₃₅) in Übereinstimmung bringen;
- das Zwischenteil (20) in Bezug auf den Außenkörper (30) und um die erste Drehachse (X₂₅) schwenken;
- die ersten Flächen (20.5, 20.6) und die zweiten Flächen (30.5, 30.6) zur Zusammenarbeit bringen.
